# EUROPÄISCHE PATENTSCHRIFT

(11) **EP 2 918 386 B1**
(45) Veröffentlichungstag und Bekanntmachung des Hinweises auf die Patenterteilung: **19.07.2017**
(21) Anmeldenummer: 15158217.8
(22) Anmeldetag: 09.03.2015
(51) Int. Cl.: B29C 33/00, B29C 33/02, B29C 33/06, B29C 41/06, B29C 41/46

(54) **Kugelrotationsverfahren zum Herstellen von Rotationsguss-Formkörpern und Kugelrotationsvorrichtung**
Method for manufacturing rotationally molded parts with a spherical mould carrier and device
Procédé pour fabriquer des articles moulés par rotomoulage avec un support de moule sphérique et dispositif

(30) Priorität: 09.03.2014 DE 102014003043
(43) Veröffentlichungstag der Anmeldung: 16.09.2015
(73) Patentinhaber: ROTO evolution GmbH, 08451 Crimmitschau (DE)
(72) Erfinder: NAUMANN, Frank, 04626 Vollmershain (DE)
(74) Vertreter: Grabovac, Dalibor

(56) Entgegenhaltungen:
- WO-A2-2014/000727
- DE-A1- 19 650 596
- JP-A- 2011 031 421
- US-A- 3 173 175
- US-A- 3 704 084

## Beschreibung

Die Erfindung betrifft ein Kugelrotationsverfahren zum Herstellen von Rotationsguss-Formkörpern, bei dem eine kugelförmige Aufnahmevorrichtung rotiert wird, in der sich zumindest eine mit Ausgangsmaterial beschickte Gussnegativform befindet.

Die Erfindung betrifft außerdem eine Kugelrotationsvorrichtung zum Herstellen von Rotationsguss-Formkörpern, die eine rotierbar gelagerte kugelförmige Aufnahmevorrichtung aufweist, in der zumindest eine Gussnegativform angeordnet ist oder anordenbar ist.

Insbesondere um Rotationsguss-Formkörper aus Kunststoffen herstellen zu können ist es erforderlich, die Gussnegativform auf eine derart hohe Temperatur zu bringen, dass das zumeist pulverförmige oder granulatförmige, insbesondere mikrogranulatförmige, Ausgangsmaterial, mit dem die Gussnegativform beschickt ist, während des Rotationsprozesses schmilzt und sich an der Innenwandung der Gussnegativform anlagert. Zu diesem Zweck werden üblicherweise die gesamte Rotationsvorrichtung oder große Teilbereiche der Rotationsvorrichtung insgesamt während des Rotationsprozesses in eine Heizkammer überführt.

Aus US 2,946,092 ist eine Vorrichtung zum rotierenden Verteilen einer flüssigen Füllung in einer Form bekannt. Die Vorrichtung weist zwei einander zugewandte Platten mit jeweils einer kreisförmigen Rinne auf, zwischen denen ein kugelförmiges Bauteil in beide Rinnen eingreifend, das die Form beinhaltet, gelagert ist. Jede der Platten ist drehend jeweils von einem eigenen Motor angetrieben. Die Vorrichtung ist auf Schienen Angeordnet, um sie insgesamt in eine Heizkammer verbringen zu können.

Aus US 3,704,084 ist eine Rotationsgießvorrichtung bekannt, in der ein hohles sphärisches Element auf Rollen gelagert ist, wobei die Rollen so gesteuert werden, dass das kugelförmige Element um eine unendliche Anzahl von Achsen gedreht werden kann. Eine oder mehrere Formhohlräume sind innerhalb des kugelförmigen Elements angeordnet, die zusammen mit dem kugelförmigen Element zur Ausführung eines Rotationsformverfahrenes rotieren. Zum Heizen kann innerhalb der Kugel ein Brenner angeordnet sein. Alternativ wird vorgeschlagen, die gesamte Rotationsgießvorrichtung in einen Heizofen zu verbringen oder die Kugel heißem Öl zu rotieren.

WO 2014/000727 A2 offenbart eine Rotationsvorrichtung für Rotationsguss-Formkörper. Die Rotationsvorrichtung weist eine Aufnahmevorrichtung für eine Gussnegativform, eine Haltevorrichtung für die Aufnahmevorrichtung und eine Antriebseinheit auf. Während des Betriebs werden die Aufnahmevorrichtung und die Gussnegativform durch die Antriebseinheit in Rotation versetzt.

US 3 173 175 A offenbart eine Rotationsgiessvorrichtung, bei der die Heizdrähte einer kugelförmigen Gussnegativform mittels Schleifkontakt über eine Rotationsvorrichtung mit Strom versorgt werden. DE 196 50 596 A1 offenbart ein Verfahren und eine Vorrichtung zur Herstellung flächiger Kunststoffschichten, vorzugsweise von hautartigen Oberflächenbezügen, aus einem pastösem, pulvrigem oder granulösem Grundmaterial.

JP 2011 031421 A betrifft eine Form und ein Verfahren zum Erwärmen von Formteilen.

Das Verbringen einer ganzen Rotationsgussvorrichtung in eine Heizkammer ist sehr aufwändig und darüber hinaus nicht sehr energieeffizient, weil außer den Gussnegativformen unnötiger Weise auch eine Vielzahl anderer Teile der Rotationsgussvorrichtung aufgeheizt werden.

Es ist daher die Aufgabe der vorliegenden Erfindung, ein Rotationsgussverfahren anzugeben das es ermöglicht, eine in einer kugelförmigen Aufnahmevorrichtung angeordnete Gussnegativform während ihrer Rotation einfach und effizient mit Energie, insbesondere für einen Heizvorgang, versorgen zu können.

Die Aufgabe wird durch ein Kugelrotationsverfahren gelöst, das dadurch gekennzeichnet ist, dass die kugelförmige Aufnahmevorrichtung zumindest teilweise elektrisch leitend ausgebildet ist und dass während des Rotationsvorganges elektrische Energie derart durch die kugelförmige Aufnahmevorrichtung geleitet wird, dass durch die kugelförmige Aufnahmevorrichtung ein elektrischer Strom fließt, wobei die elektrische Energie dazu genutzt wird, die zumindest eine Gussnegativform zu beheizen.

Es ist eine weitere Aufgabe der vorliegenden Erfindung, eine Kugelrotationsvorrichtung anzugeben, bei der eine in einer kugelförmigen Aufnahmevorrichtung angeordnete Gussnegativform während ihrer Rotation einfach und effizient mit Energie, für einen Heizvorgang, versorgt ist.

Diese Aufgabe wird durch eine Kugelrotationsvorrichtung gelöst, die dadurch gekennzeichnet ist, dass die kugelförmige Aufnahmevorrichtung zumindest teilweise elektrisch leitend ausgebildet ist und dass während eines Rotationsvorganges elektrische Energie derart durch die kugelförmige Aufnahmevorrichtung leitbar ist, dass durch die kugelförmige Aufnahmevorrichtung ein elektrischer Strom fließt, wobei die zumindest eine Gussnegativform mittels der elektrischen Energie beheizt ist.

In erfindungsgemäßer Weise wurde zunächst erkannt, dass Energie nicht zwingend in Form von thermischer Energie zu der in der kugelförmigen Aufnahmevorrichtung angeordneten Gussnegativform gebracht werden muss. In erfindungsgemäßer Weise wurde weiter erkannt, dass trotz der Rotationsbewegung der kugelförmigen Aufnahmevorrichtung Energie in Form von elektrischer Energie einfach und effizient zu der Gussnegativform, beispielsweise um diese zu erwärmen, übertragenen werden kann.

Die über die kugelförmige Aufnahmevorrichtung übertragene elektrische Energie wird vorteilhaft dazu genutzt, die zumindest eine Gussnegativform zu beheizen.

Auf diese Weise ist vorteilhaft vermieden, zusammen mit der Gussnegativform bzw. den Gussnegativformen die gesamte Kugelrotationsvorrichtung, beispielsweise in einem großen Heizofen, insgesamt aufheizen zu müssen. Vielmehr ermöglicht es die Erfindung sogar vorteilhaft, was weiter unten noch im Detail erläutert wird, eine Gussnegativform ganz gezielt bereichsweise oder punktuell unterschiedlich zu beheizen.

Die kugelförmige Aufnahmevorrichtung kann zumindest teilweise aus einem elektrisch leitenden Material, wie beispielsweise einem Metall oder eine Metalllegierung gefertigt sein. Es ist alternativ auch möglich, ein nicht leitendes Material zur Herstellung der kugelförmigen Aufnahmevorrichtung zu verwenden und dieses mit einer leitenden Beschichtung zu versehen.

Bei einer vorteilhaften Ausführung erfolgt von außen eine kontaktgebundene Spannungsübertragung auf die Außenoberfläche der kugelförmigen Aufnahmevorrichtung. Wie weiter unten noch im Detail erläutert ist, kann dies beispielsweise mittels geschickt angeordneter Kontaktelemente, insbesondere mittels Schleifkontakten, realisiert sein.

Bei einer ganz besonders vorteilhaften Ausführung weist die kugelförmige Aufnahmevorrichtung wenigstens zwei Segmente auf, die relativ zueinander elektrisch isoliert sind. Insbesondere kann vorteilhaft vorgesehen sein, dass die kugelförmige Aufnahmevorrichtung wenigstens zwei Segmente aufweist, die mittels eines elektrisch nichtleitenden Zwischenelementes relativ zueinander elektrisch isoliert sind.

Beispielsweise können die Segmente als Halbkugel-Segmente ausgebildet sein, die zu einer Kugel zusammengesetzt werden können. Hierbei können die Halbkugel-Segmente mittels eines elektrisch nichtleitenden Zwischenrings relativ zueinander elektrisch isoliert sein. Der Zwischenring kann zusätzlich noch die Funktionen übernehmen, die Halbkugel-Segmente vorübergehend aneinander zu befestigen und/oder relativ zueinander zu stabilisieren.

Ganz allgemein hat die Verwendung von Segmenten, die zueinander elektrisch isoliert sind den besonderen Vorteil, dass die Segmente als Anschlusspole für innerhalb der kugelförmigen Aufnahmevorrichtung angeordnete elektrische Verbraucher, wie beispielsweise Heizmittel, fungieren können. Insbesondere hierzu kann vorteilhaft vorgesehen sein, dass die Segmente der kugelförmigen Aufnahmevorrichtung auf unterschiedlichen elektrischen Potentialniveaus liegen. Beispielsweise kann ein Segment Erdpotential aufweisen, während ein anderes, zu dem Segment elektrisch isoliertes Segment auf einem Potentialniveau von beispielsweise mehreren hundert Volt liegt.

Insbesondere ist es auch möglich, dass die Potentialniveaus der Segmente während der Rotation je nach Stellung der kugelförmigen Aufnahmevorrichtung wechseln. Dies insbesondere, was weiter unten noch im Detail erläutert ist, wenn die Segmente über relativ zum Rotationsmittelpunk der kugelförmigen Aufnahmevorrichtung ortsfeste Kontaktelemente mit der elektrischen Spannung beaufschlagt sind.

Die Beauftragung der kugelförmigen Aufnahmevorrichtung kann sowohl mit Gleichspannung, als auch mit Wechselspannung erfolgen.

Eine Spannungsbeaufschlagung der kugelförmigen Aufnahmevorrichtung kann, wie bereits erwähnt, beispielsweise über Kontaktelemente erfolgen, die mit der Außenoberfläche der kugelförmigen Aufnahmevorrichtung in Kontakt stehen und die über elektrische Zuleitungen an eine Versorgungsspannung angeschlossen sind.

Bei den Kontaktelementen kann es sich insbesondere um Schleifkontakte handeln, die im Rotationsbetrieb an der Außenoberfläche der kugelförmigen Aufnahmevorrichtung entlang schleifen. Schleifkontakte haben den ganz besonderen Vorteil, dass auch höhere Spannungen angelegt werden können, ohne dass es zu ungewollten Überschlägen kommt. Darüber hinaus haben Schleifkontakte den besonderen Vorteil, dass auch größere elektrische Leistungen, wie sie beispielsweise zum Heizen der Gussnegativform oder mehrerer Gussnegativformen erforderlich sind, übertragen werden können. Ein Schleifkontakt kann vorteilhaft beispielsweise eine elektrisch leitende Bürste aufweisen, die mit der Außenoberfläche der kugelförmigen Aufnahmevorrichtung in Kontakt steht.

Alternativ kann das Kontaktelement auch als Rad ausgebildet sein, das auf der Außenoberfläche der kugelförmigen Aufnahmevorrichtung abholt. Hierbei kann es sich insbesondere vorteilhaft auch um ein Antriebsrad handeln, das motorisch angetrieben die kugelförmige Aufnahmevorrichtung in Rotation versetzt.

Bei einer ganz besonders vorteilhaften Ausführung erfolgt eine Spannungsbeaufschlagung der kugelförmigen Aufnahmevorrichtung über zwei Kontaktelemente, insbesondere zwei Schleifkontakte, die auf unterschiedlichen Seiten der kugelförmigen Aufnahmevorrichtung, insbesondere ortsfest zum Rotationsmittelpunkt der kugelförmigen Aufnahmevorrichtung, angeordnet sind und die mit der Außenoberfläche der kugelförmigen Aufnahmevorrichtung in Kontakt stehen.

Insbesondere kann hierbei vorteilhaft vorgesehen sein, dass die Kontaktelemente auf einer durch den Kugelmittelpunkt der kugelförmigen Aufnahmevorrichtung verlaufenden Gerade angeordnet sind und mit der Außenoberfläche der kugelförmigen Aufnahmevorrichtung in Kontakt stehen. Wenn die kugelförmige Aufnahmevorrichtung zwei voneinander isolierte Halbkugel-Segmente aufweist, steht zwangsläufig jeweils immer ein Kontaktelement mit genau einem Halbkugel-Segment in Kontakt.

Alternativ oder zusätzlich kann auch vorgesehen sein, dass die Kontaktelemente auf unterschiedlichen Seiten der kugelförmigen Aufnahmevorrichtung ortsfest zum Rotationsmittelpunkt der kugelförmigen Ausnahmevorrichtung in einem Abstand zueinander angeordnet sind, der dem Außendurchmesser der kugelförmigen Aufnahmevorrichtung entspricht.

Beispielsweise auf diese Arten ist gewährleistet, dass die Kontaktelemente niemals zeitgleich mit demselben von zwei Segmenten der kugelförmigen Aufnahmevorrichtung in Kontakt stehen, was einen elektrischen Kurzschluss verursachen würde, wenn die beiden Kontaktelemente auf unterschiedlichen Potentialniveaus liegen.

Insbesondere ist es jedoch wichtig, dass die Kontaktelemente, die mit der kugelförmigen Aufnahmevorrichtung in Kontakt stehen, im Querschnitt kleiner sind, als die Breite des zwischen den Segmenten angeordneten, nichtleitenden Zwischenelements, um zu vermeiden, dass ein und dasselbe Kontaktelement gleichzeitig mit zwei unterschiedlichen Segmenten in Kontakt kommt und so einen Kurzschluss verursacht.

Sollte die kugelförmige Aufnahmevorrichtung während des Rotationsvorganges vorübergehend eine Drehstellung einnehmen, bei der die beiden Kontaktelemente gleichzeitig mit dem zwischen den Segmenten angeordneten nichtleitenden Zwischenring in Kontakt stehen, ist die Energieversorgung kurzzeitig unterbrochen, was in der Praxis keine Rolle spielt, weil dies sehr selten vorkommt und darüber hinaus nur kurz andauert.

Alternativ zu einer Beaufschlagung der kugelförmigen Aufnahmevorrichtung mit elektrischer Energie über Kontaktelemente kann auch vorgesehen sein, dass die kugelförmige Aufnahmevorrichtung kontaktlos mit elektrischer Energie beaufschlagt wird. Dies kann beispielsweise induktiv oder durch elektrische Influenz erfolgen.

Die Gussnegativform kann beispielsweise ein elektrisch betreibbares Heizmittel aufweisen, das elektrisch leitend, beispielsweise über Kabel, mit der kugelförmigen Aufnahmevorrichtung verbunden ist.

Das elektrisch betriebene Heizmittel kann beispielsweise als elektrisch betreibbares Heizelement oder als Heizdraht oder als Rohrheizelement oder als Microcoil- Heizelement ausgebildet sein.

Insbesondere können auch mehrere Heizmittel vorhanden sein, um eine Gussnegativform ganz gezielt in unterschiedlichen Bereichen unterschiedlich zu heizen. So kann beispielsweise an kritischen Stellen der Gussnegativform, beispielsweise im Bereich von Innenecken oder engen Druchgängen, in denen sich ohnehin das Ausgangsmaterial nur schlecht anlagert, eine andere Temperatur erzeugt werden, als beispielsweise im Bereich größerer Flächen, wo das Anhaften des Ausgangsmaterials eher unproblematisch ist.

Alternativ oder zusätzlich kann auch vorgesehen sein, dass die zumindest eine Gussnegativform als Heizmittel eine elektrisch betreibbare Heizbeschichtung aufweist. Bei einer ganz besonders vorteilhaften Ausführung weist die zumindest eine Gussnegativform als Heizmittel eine Beschichtung aus Kohlenstoff-Nanoröhren auf. Derartiges Material ist auch unter der Bezeichnung "Carbon Nanotubes" (CNT) bekannt und kann auf eine oder mehrere Flächen der Gussnegativform aufgebracht sein. Beispielsweise kann die Beschichtung auf einer Außenfläche der Gussnegativform aufgebracht sein. Es ist jedoch, alternativ oder zusätzlich, auch möglich, dass die Beschichtung in der Gussnegativform aufgebracht ist. Die Beschichtung kann beispielsweise durch Sprühen oder durch Aufpinseln oder durch Rakeln oder durch Aufrollen erfolgen.

Eine solche Ausführung hat den Vorteil einer gleichmäßigen Wärmeverteilung über die gesamte beschichtete Fläche. Darüber hinaus hat eine solche Ausführung den Vorteil, dass das Heizmittel selbst eine äußerst geringe Wärmekapazität aufweist und daher sehr schnell aufgeheizt werden kann und sehr schnell wieder abkühlen kann.

Wie bereits erwähnt, kann die kugelförmige Aufnahmevorrichtung vorteilhaft als Kugelschale ausgebildet sein oder eine Kugelschale aufweisen. Von besonderem Vorteil ist eine Ausführung, bei der die Kugelschale eine Vielzahl von Durchbrüchen und/oder eine regelmäßige Anordnung mehrerer Durchbrüche aufweist, was es ermöglicht, dass die im Inneren der kugelförmigen Aufnahmevorrichtung angeordneten Teile, wie insbesondere die zumindest eine Gussnegativform, schneller wieder abkühlen können, weil die Wärme durch die Durchbrüche entweichen kann.

Von besonderem Vorteil ist es, wenn die Kugelschale auf einfache Weise, beispielsweise durch die Aufteilung in die oben genannten Segmente, geöffnet werden kann, um die Gussnegativform auszutauschen und/oder um aus der Gussnegativform einen hergestellten Rotationsguss-Formkörper entnehmen zu können und die Gussnegativform wieder neu beschicken zu können. Hierbei ist es von Vorteil, wenn die Trennung der Segmente am größten Durchmesser der kugelförmigen Aufnahmevorrichtung erfolgt.

Mit dem erfindungsgemäßen Kugelrotationsverfahren und/oder der erfindungsgemäßen Kugelrotationsvorrichtung können Rotationsguss-Formkörper sehr präzise in höchster Qualität effizient und kostengünstig hergestellt werden.

In der Zeichnung ist der Erfindungsgegenstand beispielhaft und schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: eine schematische Querschnittsdarstellung einer erfindungsgemäßen Kugelrotationsvorrichtung,
- Fig. 2: eine schematische Querschnittsdarstellung einer anderen erfindungsgemäßen Kugelrotationsvorrichtung,
- Fig. 3: ein Ausführungsbeispiel einer kugelförmigen Aufnahmevorrichtung für eine erfindungsgemäße Kugelrotationsvorrichtung und
- Fig. 4: eine schematische Detailansicht der in Figur 3 dargestellten kugelförmigen Aufnahmevorrichtung.

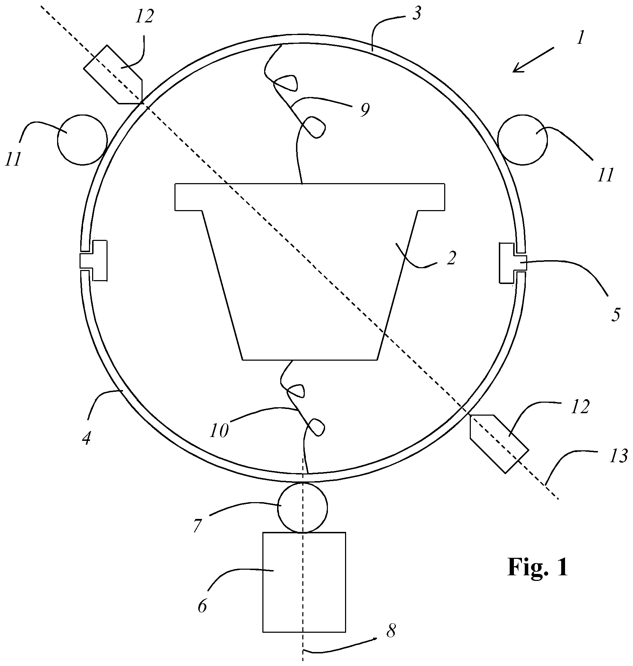

Fig. 1 zeigt schematische Querschnittsdarstellung einer erfindungsgemäßen Kugelrotationsvorrichtung zum Herstellen von Rotationsguss-Formkörpern, die eine rotierbar gelagerte kugelförmige Aufnahmevorrichtung 1 aufweist, in der eine Gussnegativform 2 drehfest zur kugelförmigen Auflaufvorrichtung 1 angeordnet ist. Die kugelförmige Aufnahmevorrichtung 1 ist elektrisch leitend ausgebildet und weist ein erstes Halbkugel-Segment 3 und ein zweites Halbkugel-Segment 4 auf, die relativ zueinander elektrisch mittels eines nichtleitenden Zwischenrings 5 isoliert sind. Der Zwischenring 5 hat zusätzlich noch die Funktion, die Halbkugel-Segmente 3, 4 aneinander zu befestigen und relativ zueinander zu stabilisieren.

Die kugelförmige Aufnahmevorrichtung 1 wird mittels eines Antriebsmotors 6, der die Antriebsenergie über ein Antriebsrad 7 auf die kugelförmige Aufnahmevorrichtung 1 überträgt, zur Rotation angetrieben. Um die kugelförmige Aufnahmevorrichtung 1 in beliebige Richtungen drehen zu können, kann der Antriebsmotor 6 zusammen mit dem Antriebsrad 7 um eine zur Rotationsachse des Antriebsrades 7 senkrechte Drehachse 8 gedreht werden. Um die kugelförmige Aufnahmevorrichtung 1 während der Rotation in ihrer Position zu halten, sind zusätzliche Führungselemente 11, insbesondere beispielsweise in Form von Halterädern, vorhanden.

Während eines Rotationsvorganges kann elektrische Energie derart durch die kugelförmige Aufnahmevorrichtung 1 geleitet werden, dass durch die kugelförmige Aufnahmevorrichtung 1 ein elektrischer Strom fließt. Hierbei dienen die Halbkugel-Segmente 3, 4 als Anschlusspole für ein innerhalb der kugelförmigen Aufnahmevorrichtung 1 angeordnetes Heizmittel, nämlich eine elektrisch betreibbare Heizbeschichtung, die auf die Oberfläche der Gussnegativform 2, beispielsweise durch Sprühbeschichten, aufgebracht ist. Es ist jedoch, alternativ oder zusätzlich, auch möglich, dass die Beschichtung in der Gussnegativform aufgebracht ist. Die Beschichtung könnte alternativ auch durch durch Aufpinseln oder durch Rakeln oder durch Aufrollen aufgebracht sein.

Das Heizmittel ist einerseits mittels einer ersten elektrischen Zuleitung 9 mit dem ersten Halbkugel-Segment 3 und andererseits mittels einer zweiten elektrischen Zuleitung 10 mit dem zweiten Halbkugel-Segment 4 elektrisch leitend verbunden.

Eine Spannungsbeaufschlagung der kugelförmigen Aufnahmevorrichtung 1 erfolgt über Kontaktelemente 12, die als Schleifkontakte ausgeführt sind und die mit der Außenoberfläche der kugelförmigen Aufnahmevorrichtung 1 in Kontakt stehen. Die Kontaktelemente 12 sind über (nicht dargestellte) elektrische Zuleitungen an eine Versorgungsspannung angeschlossen. Bei der Versorgungsspannung kann es sich um Gleichspannung, jedoch alternativ auch um eine Wechselspannung handeln.

Die Kontaktelemente 12 sind auf unterschiedlichen Seiten der kugelförmigen Aufnahmevorrichtung 1 ortsfest angeordnet, nämlich auf einer durch den Rotationsmittelpunkt der kugelförmigen Aufnahmevorrichtung verlaufenden Gerade 13. Es steht unabhängig von der Drehstellung der kugelförmigen Aufnahmevorrichtung 1 zwangsläufig jeweils immer genau eines der Kontaktelemente 12 mit genau einem Halbkugel-Segment 3, 4 in Kontakt. Dies jedoch mit der Ausnahme der Drehstellung, bei der beide Kontaktelemente 12 gleichzeitig in Kontakt mit dem nichtleitenden Zwischenring stehen. Auf diese Art ist gewährleistet, dass die beiden Kontaktelemente 12 niemals zeitgleich mit demselben Halbkugel-Segment 3, 4 der kugelförmigen Aufnahmevorrichtung 1 in Kontakt stehen, was einen elektrischen Kurzschluss verursachen würde.

Wenn die kugelförmige Aufnahmevorrichtung 1 während des Rotationsvorganges vorübergehend eine Drehstellung einnimmt, bei der die beiden Kontaktelemente 12 gleichzeitig mit dem zwischen den Segmenten angeordneten, nichtleitenden Zwischenring 12 in Kontakt stehen, ist die Energieversorgung kurzzeitig unterbrochen, was in der Praxis keine Rolle spielt, weil dies sehr selten vorkommt und darüber hinaus nur so kurz andauert, dass der Heizprozess hiervon nahezu nicht beeinflusst wird.

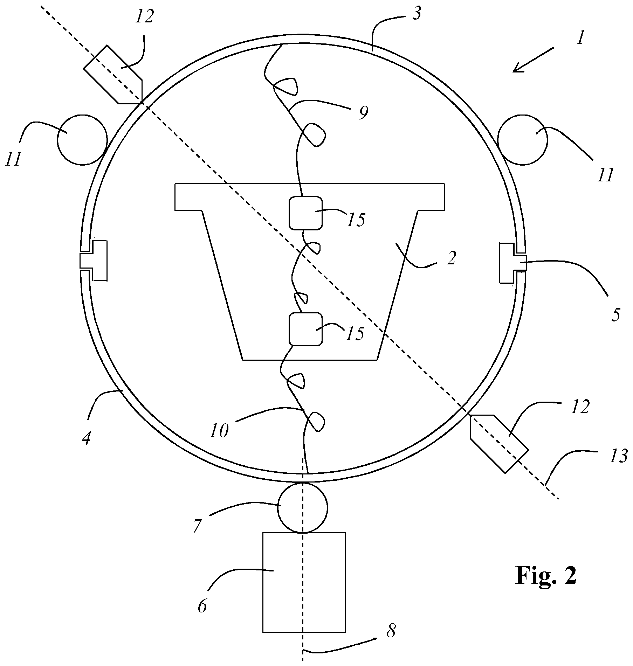

Figur 2 zeigt ein anderes Ausführungsbeispiel einer erfindungsgemäßen Kugelrotationsvorrichtung, die im Wesentlichen genauso aufgebaut ist, die die in Figur 1 dargestellte Kugelrotationsvorrichtung. Allerdings weist die Gussnegativform 2 dieser Kugelrotationsvorrichtung als Heizmittel zwei elektrisch in Reihe geschaltete Heizelemente 15 auf, die jeweils Heizdrähte beinhalten.

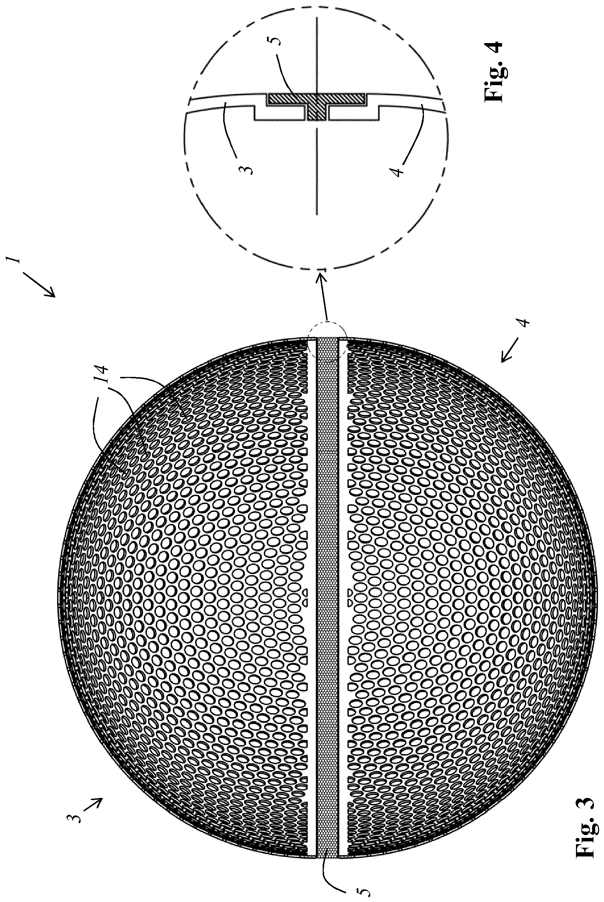

Figur 3 zeigt ein Ausführungsbeispiel einer kugelförmigen Aufnahmevorrichtung 1 für eine erfindungsgemäße Kugelrotationsvorrichtung. Die kugelförmige Aufnahmevorrichtung 1 weist ein erstes Halbkugel-Segment 3 und ein zweites Halbkugel-Segment 4, zwischen denen ein nichtleitender Zwischenring 5 angeordnet ist, auf. Das erste Halbkugel-Segment 3 und das zweite Halbkugel-Segment 4 sowie der nichtleitende Zwischenring 5 bilden eine Kugelschale. Das erste Halbkugel-Segment 3 und das zweite Halbkugel-Segment 4 sind aus Metall oder einer Metalllegierung hergestellt.

Das erste Halbkugel-Segment 3 und das zweite Halbkugel-Segment 4 weisen eine Vielzahl von Durchbrüchen 14 in regelmäßiger Anordnung auf. Die Durchbrüche 14 ermöglichen ist, dass die im Inneren der kugelförmigen Aufnahmevorrichtung 1 angeordneten Teile, wie insbesondere die zumindest eine Gussnegativform 2, schneller wieder abkühlen können, weil die Wärme durch die Durchbrüche 14 entweichen kann.

Figur 4 zeigt eine schematische Detailansicht der in Figur 3 dargestellten kugelförmigen Aufnahmevorrichtung 1. Das erste Halbkugel-Segment 3 und das zweite Halbkugel-Segment 4 weisen jeweils an ihrem Umfangsrand einen Falz für den nichtleitenden Zwischenring 5 auf. Der nichtleitende Zwischenring 5 ist im Querschnitt T-förmig ausgestaltet und fügt sich derart in die beiden Falze der Halbkugel-Segmenten 3, 4, dass die Außenoberfläche der kugelförmigen Aufnahmevorrichtung 1 an dieser Stelle glatt ist und keinen Absatz aufweist.

### Bezugszeichenliste:

- 1: Kugelförmige Aufnahmevorrichtung
- 2: Gussnegativform
- 3: Erstes Halbkugel-Segment
- 4: Zweites Halbkugel-Segment
- 5: zwischen Ring
- 6: Antriebsmotor
- 7: Antriebsrad
- 8: Drehachse
- 9: Erste elektrische Zuleitung
- 10: zweite elektrische Zuleitung
- 11: Führungselement
- 12: Kontaktelemente
- 13: Gerade
- 14: Durchbrüche
- 15: Heizelemente

## Patentansprüche

1. Kugelrotationsverfahren zum Herstellen von Rotationsguss-Formkörpern, bei dem eine kugelförmige Aufnahmevorrichtung rotiert wird, in der sich zumindest eine mit Ausgangsmaterial beschickte Gussnegativform befindet, **dadurch gekennzeichnet, dass** die kugelförmige Aufnahmevorrichtung zumindest teilweise elektrisch leitend ausgebildet ist und dass während des Rotationsvorganges elektrische Energie derart durch die kugelförmige Aufnahmevorrichtung geleitet wird, dass durch die kugelförmige Aufnahmevorrichtung ein elektrischer Strom fließt, wobei die elektrische Energie dazu genutzt wird, die zumindest eine Gussnegativform zu beheizen.

2. Kugelrotationsverfahren nach Anspruch 1, **dadurch gekennzeichnet, dass** von außen eine kontaktgebundene Spannungsübertragung auf die Außenoberfläche der kugelförmigen Aufnahmevorrichtung erfolgt.

3. Kugelrotationsverfahren nach Anspruch 1 oder 2, **dadurch gekennzeichnet, dass**
a. die kugelförmige Aufnahmevorrichtung wenigstens zwei Segmente aufweist, die relativ zueinander elektrisch isoliert sind, und/oder dass
b. die kugelförmige Aufnahmevorrichtung wenigstens zwei Segmente aufweist, die mittels eines elektrisch nichtleitenden Zwischenelementes relativ zueinander elektrisch isoliert sind, und/oder dass
c. die kugelförmige Aufnahmevorrichtung zwei Halbkugel-Segmente aufweist, die relativ zueinander elektrisch isoliert sind, und/oder dass
d. die kugelförmige Aufnahmevorrichtung zwei Halbkugel-Segmente aufweist, die mittels eines elektrisch nichtleitenden Zwischenrings relativ zueinander elektrisch isoliert sind, und/oder dass
e. die kugelförmige Aufnahmevorrichtung wenigstens zwei Segmente aufweist, die auf unterschiedlichen elektrischen Potentialniveaus liegen.

4. Kugelrotationsverfahren nach einem der Ansprüche 1 bis 3, **dadurch gekennzeichnet, dass**
a. eine Spannungsbeaufschlagung der kugelförmigen Aufnahmevorrichtung über wenigstens ein Kontaktelement, insbesondere einen Schleifkontakt, erfolgt, das mit der Außenoberfläche der kugelförmigen Aufnahmevorrichtung in Kontakt steht, und/oder dass
b. eine Spannungsbeaufschlagung der kugelförmigen Aufnahmevorrichtung über zwei Kontaktelemente, insbesondere zwei Schleifkontakte, erfolgt, die auf unterschiedlichen Seiten der kugelförmigen Aufnahmevorrichtung angeordnet sind und die mit der Außenoberfläche der kugelförmigen Aufnahmevorrichtung in Kontakt stehen, und/oder dass
c. eine Spannungsbeaufschlagung der kugelförmigen Aufnahmevorrichtung über zwei Kontaktelemente, insbesondere zwei Schleifkontakte, erfolgt, die auf unterschiedlichen Seiten der kugelförmigen Aufnahmevorrichtung auf einer durch den Kugelmittelpunkt der kugelförmigen Aufnahmevorrichtung verlaufenden Gerade angeordnet sind und die mit der Außenoberfläche der kugelförmigen Aufnahmevorrichtung in Kontakt stehen, und/oder dass
d. eine Spannungsbeaufschlagung der kugelförmigen Aufnahmevorrichtung über zwei Kontaktelemente, insbesondere zwei Schleifkontakte, erfolgt, die auf unterschiedlichen Seiten der kugelförmigen Aufnahmevorrichtung in einem Abstand zueinander angeordnet sind, der dem Außendurchmesser der kugelförmigen Aufnahmevorrichtung entspricht, und die mit der Außenoberfläche der kugelförmigen Aufnahmevorrichtung in Kontakt stehen, und/oder dass
e. eine Spannungsbeaufschlagung der kugelförmigen Aufnahmevorrichtung über zwei Kontaktelemente, insbesondere zwei Schleifkontakte, erfolgt, die derart angeordnet sind, dass die Schleifkontakte niemals zeitgleich mit demselben von zwei Segmenten der kugelförmigen Aufnahmevorrichtung in Kontakt stehen.

5. Kugelrotationsverfahren nach Anspruch 1, **dadurch gekennzeichnet, dass**
a. die kugelförmige Aufnahmevorrichtung kontaktlos mit elektrischer Energie beaufschlagt wird, und/oder dass
b. die kugelförmige Aufnahmevorrichtung induktiv mit elektrischer Energie beaufschlagt wird, und/oder dass
c. die kugelförmige Aufnahmevorrichtung durch elektrische Influenz mit elektrischer Energie beaufschlagt wird.

6. Kugelrotationsverfahren nach einem der Ansprüche 1 bis 5, **dadurch gekennzeichnet, dass**
a. die zumindest eine Gussnegativform zumindest ein elektrisch betreibbares Heizmittel aufweist, und/oder dass
b. die zumindest eine Gussnegativform zumindest ein elektrisch betreibbares Heizmittel aufweist, das elektrisch leitend mit der kugelförmigen Aufnahmevorrichtung verbunden ist, und/oder dass
c. die zumindest eine Gussnegativform ein elektrisch betreibbares Heizmittel aufweist, das als elektrisch betreibbares Heizelementen oder als Heizdraht ausgebildet ist, und/oder dass
d. die zumindest eine Gussnegativform als Heizmittel eine elektrisch betreibbare Heizbeschichtung aufweist, und/oder dass
e. die zumindest eine Gussnegativform als Heizmittel Kohlenstoff-Nanoröhren aufweist und/oder dass
f. die zumindest eine Gussnegativform als Heizmittel eine Beschichtung aus Kohlenstoff-Nanoröhren aufweist.

7. Kugelrotationsverfahren nach Anspruch 6, **dadurch gekennzeichnet, dass**
a. das Beheizen der Gussnegativform punktuell oder bereichsweise flächig oder ganzflächig erfolgt und/oder dass
b. das Beheizen der Gussnegativform bereichsweise unterschiedlich erfolgt.

8. Kugelrotationsverfahren nach einem der Ansprüche 1 bis 7, **dadurch gekennzeichnet, dass**
a. die kugelförmige Aufnahmevorrichtung als Kugelschale ausgebildet ist und/oder eine Kugelschale aufweist, und/oder dass
b. die kugelförmige Aufnahmevorrichtung als Kugelschale ausgebildet ist und eine Vielzahl von Durchbrüchen aufweist und/oder dass
c. die kugelförmige Aufnahmevorrichtung als Kugelschale ausgebildet ist und eine Vielzahl von regelmäßig angeordneten Durchbrüchen aufweist.

9. Kugelrotationsvorrichtung zum Herstellen von Rotationsguss-Formkörpern, die eine rotierbar gelagerte kugelförmige Aufnahmevorrichtung aufweist, in der zumindest eine Gussnegativform angeordnet ist oder anordenbar ist, **dadurch gekennzeichnet, dass** die kugelförmige Aufnahmevorrichtung zumindest teilweise elektrisch leitend ausgebildet ist und dass während eines Rotationsvorganges elektrische Energie derart durch die kugelförmige Aufnahmevorrichtung leitbar ist, dass durch die kugelförmige Aufnahmevorrichtung ein elektrischer Strom fließt, wobei die zumindest eine Gussnegativform mittels der elektrischen Energie beheizt ist.

10. Kugelrotationsvorrichtung nach Anspruch 9, **dadurch gekennzeichnet, dass**
a. die kugelförmige Aufnahmevorrichtung wenigstens zwei Segmente aufweist, die relativ zueinander elektrisch isoliert sind, und/oder dass
b. die kugelförmige Aufnahmevorrichtung wenigstens zwei Segmente aufweist, die mittels eines elektrisch nichtleitenden Zwischenelementes relativ zueinander elektrisch isoliert sind, und/oder dass
c. die kugelförmige Aufnahmevorrichtung zwei Halbkugel-Segmente aufweist, die relativ zueinander elektrisch isoliert sind, und/oder dass
d. die kugelförmige Aufnahmevorrichtung zwei Halbkugel-Segmente aufweist, die mittels eines elektrisch nichtleitenden Zwischenrings relativ zueinander elektrisch isoliert sind, und/oder dass
e. die kugelförmige Aufnahmevorrichtung wenigstens zwei Segmente aufweist, die auf unterschiedlichen elektrischen Potentialniveaus liegen.

11. Kugelrotationsvorrichtung nach Anspruch 9 oder 10, **dadurch gekennzeichnet, dass**
a. die Kugelrotationsvorrichtung wenigstens ein Kontaktelement, insbesondere einen Schleifkontakt, für eine Spannungsbeaufschlagung der kugelförmigen Aufnahmevorrichtung aufweist, der mit der Außenoberfläche der kugelförmigen Aufnahmevorrichtung in Kontakt steht, und/oder dass
b. die Kugelrotationsvorrichtung zwei Kontaktelemente, insbesondere zwei Schleifkontakte, für eine Spannungsbeaufschlagung aufweist, die auf unterschiedlichen Seiten der kugelförmigen Aufnahmevorrichtung angeordnet sind und die mit der Außenoberfläche der kugelförmigen Aufnahmevorrichtung in Kontakt stehen, und/oder dass
c. die Kugelrotationsvorrichtung zwei Kontaktelemente, insbesondere zwei Schleifkontakte, für eine Spannungsbeaufschlagung aufweist, die auf unterschiedlichen Seiten der kugelförmigen Aufnahmevorrichtung auf einer durch den Kugelmittelpunkt der kugelförmigen Aufnahmevorrichtung verlaufenden Gerade angeordnet sind und die mit der Außenoberfläche der kugelförmigen Aufnahmevorrichtung in Kontakt stehen, und/oder dass
d. die Kugelrotationsvorrichtung zwei Kontaktelemente, insbesondere zwei Schleifkontakte, für eine Spannungsbeaufschlagung aufweist, die auf unterschiedlichen Seiten der kugelförmigen Aufnahmevorrichtung in einem Abstand zueinander angeordnet sind, der dem Außendurchmesser der kugelförmigen Aufnahmevorrichtung entspricht, und die mit der Außenoberfläche der kugelförmigen Aufnahmevorrichtung in Kontakt stehen, und/oder dass
e. die Kugelrotationsvorrichtung zwei Kontaktelemente, insbesondere zwei Schleifkontakte, für eine Spannungsbeaufschlagung aufweist, die derart angeordnet sind, dass die Schleifkontakte niemals zeitgleich mit demselben von zwei Segmenten der kugelförmigen Aufnahmevorrichtung in Kontakt stehen.

12. Kugelrotationsvorrichtung nach Anspruch 11, **dadurch gekennzeichnet, dass**
a. die kugelförmige Aufnahmevorrichtung kontaktlos mit elektrischer Energie beaufschlagt ist, und/oder dass
b. die kugelförmige Aufnahmevorrichtung induktiv mit elektrischer Energie beaufschlagt ist, und/oder dass
c. die kugelförmige Aufnahmevorrichtung durch elektrische Influenz mit elektrischer Energie beaufschlagt ist.

13. Kugelrotationsvorrichtung nach einem der Ansprüche 9 bis 12, **dadurch gekennzeichnet, dass**
a. die zumindest eine Gussnegativform zumindest ein elektrisch betreibbares Heizmittel aufweist, und/oder dass
b. die zumindest eine Gussnegativform zumindest ein elektrisch betreibbares Heizmittel aufweist, das elektrisch leitend mit der kugelförmigen Aufnahmevorrichtung verbunden ist, und/oder dass
c. die zumindest eine Gussnegativform ein elektrisch betreibbares Heizmittel aufweist, das als elektrisch betreibbares Heizelementen oder als Heizdraht ausgebildet ist, und/oder dass
d. die zumindest eine Gussnegativform als Heizmittel eine elektrisch betreibbare Heizbeschichtung aufweist, und/oder dass
e. die zumindest eine Gussnegativform als Heizmittel Kohlenstoff-Nanoröhren aufweist und/oder dass
f. die zumindest eine Gussnegativform als Heizmittel eine Beschichtung aus Kohlenstoff-Nanoröhren aufweist.

14. Kugelrotationsvorrichtung nach einem der Ansprüche 9 bis 13, **dadurch gekennzeichnet, dass**
a. die kugelförmige Aufnahmevorrichtung als Kugelschale ausgebildet ist und/oder dass
b. die kugelförmige Aufnahmevorrichtung als Kugelschale ausgebildet ist und eine Vielzahl von Durchbrüchen aufweist und/oder dass
c. die kugelförmige Aufnahmevorrichtung als Kugelschale ausgebildet ist und eine Vielzahl von regelmäßig angeordneten Durchbrüchen aufweist.

## Claims

1. Spherical rotation method for manufacturing rotationally moulded parts, in which a spherical receiving device in which there is at least one negative casting mould charged with starting material is rotated, **characterized in that** the spherical receiving device is at least partially formed as electrically conductive and **in that** electrical energy is passed through the spherical receiving device during the rotating operation in such a way that an electric current flows through the spherical receiving device, the electrical energy being used to heat the at least one negative casting mould.

2. Spherical rotation method according to Claim 1, **characterized in that** a contact-bound voltage transfer takes place from the outside to the outer surface of the spherical receiving device.

3. Spherical rotation method according to Claim 1 or 2, **characterized in that**
a. the spherical receiving device has at least two segments, which are electrically insulated in relation to one another, and/or **in that**
b. the spherical receiving device has at least two segments, which are electrically insulated in relation to one another by means of an electrically nonconducting intermediate element, and/or **in that**
c. the spherical receiving device has two hemispherical segments, which are electrically insulated in relation to one another, and/or **in that**
d. the spherical receiving device has two hemispherical segments, which are electrically insulated in relation to one another by means of an electrically nonconducting intermediate ring, and/or **in that**
e. the spherical receiving device has at least two segments, which lie at different electrical potential levels.

4. Spherical rotation method according to one of Claims 1 to 3, **characterized in that**
a. an application of voltage to the spherical receiving device takes place by way of at least one contact element, in particular a sliding contact, which is in contact with the outer surface of the spherical receiving device, and/or **in that**
b. an application of voltage to the spherical receiving device takes place by way of two contact elements, in particular two sliding contacts, which are arranged on different sides of the spherical receiving device and are in contact with the outer surface of the spherical receiving device, and/or **in that**
c. an application of voltage to the spherical receiving device takes place by way of two contact elements, in particular two sliding contacts, which are arranged on different sides of the spherical receiving device on a straight line running through the centre point of the sphere of the spherical receiving device and are in contact with the outer surface of the spherical receiving device, and/or **in that**
d. an application of voltage to the spherical receiving device takes place by way of two contact elements, in particular two sliding contacts, which are arranged on different sides of the spherical receiving device at a distance from one another that corresponds to the outside diameter of the spherical receiving device and are in contact with the outer surface of the spherical receiving device, and/or **in that**
e. an application of voltage to the spherical receiving device takes place by way of two contact elements, in particular two sliding contacts, which are arranged in such a way that the sliding contacts are never in contact at the same time with the same of two segments of the spherical receiving device.

5. Spherical rotation method according to Claim 1, **characterized in that**
a. electrical energy is applied contactlessly to the spherical receiving device, and/or **in that**
b. electrical energy is applied inductively to the spherical receiving device, and/or **in that**
c. electrical energy is applied to the spherical receiving device by electrical influence.

6. Spherical rotation method according to one of Claims 1 to 5, **characterized in that**
a. the at least one negative casting mould has at least one electrically operable heating means, and/or **in that**
b. the at least one negative casting mould has at least one electrically operable heating means, which is connected electrically conductively to the spherical receiving device, and/or **in that**
c. the at least one negative casting mould has an electrically operable heating means, which is formed as electrically operable heating elements or as a heating wire, and/or **in that**
d. the at least one negative casting mould has as heating means an electrically operable heating coating, and/or **in that**
e. the at least one negative casting mould has as heating means carbon nanotubes, and/or **in that**
f. the at least one negative casting mould has as heating means a coating of carbon nanotubes.

7. Spherical rotation method according to Claim 6, **characterized in that**
a. the heating of the negative casting mould takes place at discrete points or over certain regions of the surface area or over the full surface area, and/or **in that**
b. the heating of the negative casting mould takes place differently from region to region.

8. Spherical rotation method according to one of Claims 1 to 7, **characterized in that**
a. the spherical receiving device is formed as a spherical dish and/or has a spherical dish, and/or **in that**
b. the spherical receiving device is formed as a spherical dish and has a multiplicity of apertures, and/or **in that**
c. the spherical receiving device is formed as a spherical dish and has a multiplicity of regularly arranged apertures.

9. Spherical rotation device for manufacturing rotationally moulded parts, which has a rotatably mounted spherical receiving device, in which at least one negative casting mould is arranged, **characterized in that** the spherical receiving device is at least partially formed as electrically conductive and **in that** electrical energy can be passed through the spherical receiving device during a rotating operation in such a way that an electric current flows through the spherical receiving device, the at least one negative casting mould being heated by means of the electrical energy.

10. Spherical rotation device according to Claim 9, **characterized in that**
a. the spherical receiving device has at least two segments, which are electrically insulated in relation to one another, and/or **in that**
b. the spherical receiving device has at least two segments, which are electrically insulated in relation to one another by means of an electrically nonconducting intermediate element, and/or **in that**
c. the spherical receiving device has two hemispherical segments, which are electrically insulated in relation to one another, and/or **in that**
d. the spherical receiving device has two hemispherical segments, which are electrically insulated in relation to one another by means of an electrically nonconducting intermediate ring, and/or **in that**
e. the spherical receiving device has at least two segments, which lie at different electrical potential levels.

11. Spherical rotation device according to Claim 9 or 10, **characterized in that**
a. the spherical rotation device has at least one contact element, in particular a sliding contact, for an application of voltage to the spherical receiving device, which is in contact with the outer surface of the spherical receiving device, and/or **in that**
b. the spherical rotation device has two contact elements, in particular two sliding contacts, for an application of voltage, which are arranged on different sides of the spherical receiving device and are in contact with the outer surface of the spherical receiving device, and/or **in that**
c. the spherical rotation device has two contact elements, in particular two sliding contacts, for an application of voltage, which are arranged on different sides of the spherical receiving device on a straight line running through the centre point of the sphere of the spherical receiving device and are in contact with the outer surface of the spherical receiving device, and/or **in that**
d. the spherical rotation device has two contact elements, in particular two sliding contacts, for an application of voltage, which are arranged on different sides of the spherical receiving device at a distance from one another that corresponds to the outside diameter of the spherical receiving device and are in contact with the outer surface of the spherical receiving device, and/or **in that**
e. the spherical rotation device has two contact elements, in particular two sliding contacts, for an application of voltage, which are arranged in such a way that the sliding contacts are never in contact at the same time with the same of two segments of the spherical receiving device.

12. Spherical rotation device according to Claim 11, **characterized in that**
a. electrical energy is applied contactlessly to the spherical receiving device, and/or **in that**
b. electrical energy is applied inductively to the spherical receiving device, and/or **in that**
c. electrical energy is applied to the spherical receiving device by electrical influence.

13. Spherical rotation device according to one of Claims 9 to 12, **characterized in that**
a. the at least one negative casting mould has at least one electrically operable heating means, and/or **in that**
b. the at least one negative casting mould has at least one electrically operable heating means, which is connected electrically conductively to the spherical receiving device, and/or **in that**
c. the at least one negative casting mould has an electrically operable heating means, which is formed as electrically operable heating elements or as a heating wire, and/or **in that**
d. the at least one negative casting mould has as heating means an electrically operable heating coating, and/or **in that**
e. the at least one negative casting mould has as heating means carbon nanotubes, and/or **in that**
f. the at least one negative casting mould has as heating means a coating of carbon nanotubes.

14. Spherical rotation device according to one of Claims 9 to 13, **characterized in that**
a. the spherical receiving device is formed as a spherical dish, and/or **in that**
b. the spherical receiving device is formed as a spherical dish and has a multiplicity of apertures, and/or **in that**
c. the spherical receiving device is formed as a spherical dish and has a multiplicity of regularly arranged apertures.

## Revendications

1. Procédé de rotation sphérique pour la fabrication de corps moulés par rotomoulage, dans lequel un dispositif de réception de forme sphérique est entraîné en rotation, dans lequel se trouve au moins un moule négatif de moulage garni d'une matière initiale, **caractérisé en ce que** le dispositif de réception de forme sphérique est réalisé de manière au moins en partie électriquement conducteur et **en ce que** pendant l'opération de rotation, de l'énergie électrique est guidée à travers le dispositif de réception de forme sphérique de telle sorte qu'un courant électrique s'écoule à travers le dispositif de réception de forme sphérique, l'énergie électrique étant utilisée pour chauffer l'au moins un moule négatif de moulage.

2. Procédé de rotation sphérique selon la revendication 1, **caractérisé en ce qu'**un transfert de tension avec contact s'effectue depuis l'extérieur à la surface supérieure du dispositif de réception de forme sphérique.

3. Procédé de rotation sphérique selon la revendication 1 ou 2, **caractérisé en ce que**
a. le dispositif de réception de forme sphérique présente au moins deux segments qui sont isolés électriquement l'un par rapport à l'autre, et/ou **en ce que**
b. le dispositif de réception de forme sphérique présente au moins deux segments qui sont isolés électriquement l'un par rapport à l'autre au moyen d'un élément intermédiaire non conducteur de l'électricité et/ou **en ce que**
c. le dispositif de réception de forme sphérique présente deux segments hémisphériques qui sont isolés électriquement l'un par rapport à l'autre, et/ou **en ce que**
d. le dispositif de réception de forme sphérique présente deux segments hémisphériques qui sont isolés électriquement l'un par rapport à l'autre au moyen d'une bague intermédiaire non conductrice de l'électricité, et/ou **en ce que**
e. le dispositif de réception de forme sphérique présente au moins deux segments qui sont situés à des niveaux de potentiel électrique différents.

4. Procédé de rotation sphérique selon l'une quelconque des revendications 1 à 3,
**caractérisé en ce que**
a. une sollicitation en tension du dispositif de réception de forme sphérique s'effectue par le biais d'au moins un élément de contact, en particulier un contact frottant, qui est en contact avec la surface extérieure du dispositif de réception de forme sphérique, et/ou **en ce que**
b. une sollicitation en tension du dispositif de réception de forme sphérique s'effectue par le biais de deux éléments de contact, en particulier deux contacts frottants, qui sont disposés sur des côtés différents du dispositif de réception de forme sphérique et qui sont en contact avec la surface extérieure du dispositif de réception de forme sphérique, et/ou **en ce que**
c. une sollicitation en tension du dispositif de réception de forme sphérique s'effectue par le biais de deux éléments de contact, en particulier de deux contacts frottants, qui sont disposés sur des côtés opposés du dispositif de réception de forme sphérique sur une droite s'étendant à travers le centre de la sphère du dispositif de réception de forme sphérique et qui sont en contact avec la surface extérieure du dispositif de réception de forme sphérique, et/ou **en ce que**
d. une sollicitation en tension du dispositif de réception de forme sphérique s'effectue par le biais de deux éléments de contact, en particulier deux contacts frottants, qui sont disposés à distance l'un de l'autre sur des côtés différents du dispositif de réception de forme sphérique, laquelle distance correspond au diamètre extérieur du dispositif de réception de forme sphérique, et qui sont en contact avec la surface extérieure du dispositif de réception de forme sphérique, et/ou **en ce que**
e. une sollicitation en tension du dispositif de réception de forme sphérique s'effectue par le biais de deux éléments de contact, en particulier deux contacts frottants, qui sont disposés de telle sorte que les contacts frottants ne soient jamais simultanément en contact avec le même segment de deux segments du dispositif de réception de forme sphérique.

5. Procédé de rotation sphérique selon la revendication 1, **caractérisé en ce que**
a. le dispositif de réception de forme sphérique est sollicité sans contact avec de l'énergie électrique, et/ou **en ce que**
b. le dispositif de réception de forme sphérique est sollicité par induction avec de l'énergie électrique, et/ou **en ce que**
c. le dispositif de réception de forme sphérique est sollicité par influence électrique avec de l'énergie électrique.

6. Procédé de rotation sphérique selon l'une quelconque des revendications 1 à 5, **caractérisé en ce que**
a. l'au moins un moule négatif de moulage présente au moins un moyen de chauffage pouvant être activé électriquement, et/ou **en ce que**
b. l'au moins un moule négatif de moulage présente au moins un moyen de chauffage pouvant être activé électriquement, lequel est connecté de manière électriquement conductrice au dispositif de réception de forme sphérique, et/ou **en ce que**
c. l'au moins un moule négatif de moulage présente un moyen de chauffage pouvant être activé électriquement, lequel est réalisé sous forme d'élément chauffant ou de fil chauffant pouvant être activé électriquement, et/ou **en ce que**
d. l'au moins un moule négatif de moulage présente en tant que moyen de chauffage un revêtement chauffant pouvant être activé électriquement, et/ou **en ce que**
e. l'au moins un moule négatif de moulage présente en tant que moyen de chauffage des nanotubes de carbone et/ou **en ce que**
f. l'au moins un moule négatif de moulage présente en tant que moyen de chauffage un revêtement constitué de nanotubes de carbone.

7. Procédé de rotation sphérique selon la revendication 6, **caractérisé en ce que**
a. le chauffage du moule négatif de moulage s'effectue ponctuellement ou sur une partie de la surface ou sur toute la surface et/ou **en ce que**
b. le chauffage du moule négatif de moulage s'effectue différemment dans certaines parties.

8. Procédé de rotation sphérique selon l'une quelconque des revendications 1 à 7, **caractérisé en ce que**
a. le dispositif de réception de forme sphérique est réalisé sous forme de coque sphérique et/ou présente une coque sphérique, et/ou **en ce que**
b. le dispositif de réception de forme sphérique est réalisé sous forme de coque sphérique et présente une pluralité d'ouvertures et/ou **en ce que**
c. le dispositif de réception de forme sphérique est réalisé sous forme de coque sphérique et présente une pluralité d'ouvertures disposées régulièrement.

9. Dispositif de rotation sphérique pour la fabrication de corps moulés par rotomoulage, qui présente un dispositif de réception de forme sphérique supporté à rotation, dans lequel est disposé au moins un moule négatif de moulage, **caractérisé en ce que** le dispositif de réception de forme sphérique est réalisé au moins en partie sous forme électriquement conductrice et **en ce que** pendant une opération de rotation, de l'énergie électrique peut être conduite à travers le dispositif de réception de forme sphérique de telle sorte qu'un courant électrique circule à travers le dispositif de réception de forme sphérique, l'au moins un moule négatif de moulage étant chauffé au moyen de l'énergie électrique.

10. Dispositif de rotation sphérique selon la revendication 9, **caractérisé en ce que**
a. le dispositif de réception de forme sphérique présente au moins deux segments qui sont isolés électriquement l'un par rapport à l'autre, et/ou **en ce que**
b. le dispositif de réception de forme sphérique présente au moins deux segments qui sont isolés électriquement l'un par rapport à l'autre au moyen d'un élément intermédiaire non conducteur de l'électricité et/ou **en ce que**
c. le dispositif de réception de forme sphérique présente deux segments hémisphériques qui sont isolés électriquement l'un par rapport à l'autre, et/ou **en ce que**
d. le dispositif de réception de forme sphérique présente deux segments hémisphériques qui sont isolés électriquement l'un par rapport à l'autre au moyen d'une bague intermédiaire non conductrice de l'électricité, et/ou **en ce que**
e. le dispositif de réception de forme sphérique présente au moins deux segments qui sont situés à des niveaux de potentiel électrique différents.

11. Dispositif de rotation sphérique selon la revendication 9 ou 10, **caractérisé en ce que**
a. le dispositif de rotation sphérique présente au moins un élément de contact, en particulier un contact frottant pour une sollicitation en tension du dispositif de réception de forme sphérique, qui est en contact avec la surface extérieure du dispositif de réception de forme sphérique, et/ou **en ce que**
b. le dispositif de rotation sphérique présente deux éléments de contact, en particulier deux contacts frottants pour une sollicitation en tension, qui sont disposés sur des côtés différents du dispositif de réception de forme sphérique et qui sont en contact avec la surface extérieure du dispositif de réception de forme sphérique, et/ou **en ce que**
c. le dispositif de rotation sphérique présente deux éléments de contact, en particulier deux contacts frottants, pour une sollicitation en tension, qui sont disposés sur des côtés opposés du dispositif de réception de forme sphérique sur une droite s'étendant à travers le centre de la sphère du dispositif de réception de forme sphérique et qui sont en contact avec la surface extérieure du dispositif de réception de forme sphérique, et/ou **en ce que**
d. le dispositif de rotation sphérique présente deux éléments de contact, en particulier deux contacts frottants pour une sollicitation en tension, qui sont disposés à distance l'un de l'autre sur des côtés différents du dispositif de réception de forme sphérique, laquelle distance correspond au diamètre extérieur du dispositif de réception de forme sphérique, et qui sont en contact avec la surface extérieure du dispositif de réception de forme sphérique, et/ou **en ce que**
e. le dispositif de rotation sphérique présente deux éléments de contact, en particulier deux contacts frottants, pour une sollicitation en tension, qui sont disposés de telle sorte que les contacts frottants ne soient jamais simultanément en contact avec le même segment de deux segments du dispositif de réception de forme sphérique.

12. Dispositif de rotation sphérique selon la revendication 11, **caractérisé en ce que**
a. le dispositif de réception de forme sphérique est sollicité sans contact avec de l'énergie électrique, et/ou **en ce que**
b. le dispositif de réception de forme sphérique est sollicité par induction avec de l'énergie électrique, et/ou **en ce que**
c. le dispositif de réception de forme sphérique est sollicité par influence électrique avec de l'énergie électrique.

13. Dispositif de rotation sphérique selon l'une quelconque des revendications 9 à 12, **caractérisé en ce que**
a. l'au moins un moule négatif de moulage présente au moins un moyen de chauffage pouvant être activé électriquement, et/ou **en ce que**
b. l'au moins un moule négatif de moulage présente au moins un moyen de chauffage pouvant être activé électriquement, lequel est connecté de manière électriquement conductrice au dispositif de réception de forme sphérique, et/ou **en ce que**
c. l'au moins un moule négatif de moulage présente un moyen de chauffage pouvant être activé électriquement, lequel est réalisé sous forme d'élément chauffant ou de fil chauffant pouvant être activé électriquement, et/ou **en ce que**
d. l'au moins un moule négatif de moulage présente en tant que moyen de chauffage un revêtement chauffant pouvant être activé électriquement, et/ou **en ce que**
e. l'au moins un moule négatif de moulage présente en tant que moyen de chauffage des nanotubes de carbone et/ou **en ce que**
f. l'au moins un moule négatif de moulage présente en tant que moyen de chauffage un revêtement constitué de nanotubes de carbone.

14. Dispositif de rotation sphérique selon l'une quelconque des revendications 9 à 13, **caractérisé en ce que**
a. le dispositif de réception de forme sphérique est réalisé sous forme de coque sphérique et/ou **en ce que**
b. le dispositif de réception de forme sphérique est réalisé sous forme de coque sphérique et présente une pluralité d'ouvertures et/ou **en ce que**
c. le dispositif de réception de forme sphérique est réalisé sous forme de coque sphérique et présente une pluralité d'ouvertures disposées régulièrement.
